# EUROPÄISCHE PATENTSCHRIFT

(11) **EP 0 563 805 B1**
(45) Veröffentlichungstag und Bekanntmachung des Hinweises auf die Patenterteilung: **17.01.1996**
(21) Anmeldenummer: 93104989.4
(22) Anmeldetag: 26.03.1993
(51) Int. Cl.: E01C 19/20, G05D 7/06

(54) **Winterdienstfahrzeug**
Winter service spreading vehicle
Véhicule d'épandage pour service d'hiver

(30) Priorität: 01.04.1992 DE 4210690
(43) Veröffentlichungstag der Anmeldung: 06.10.1993
(73) Patentinhaber: SCHMIDT WINTERDIENST- UND KOMMUNALTECHNIK GmbH, D-79837 St Blasien (DE)
(72) Erfinder: Schneider, Michael Johannes, W-7821 Grafenhausen-Rothaus (DE)
(74) Vertreter: Grättinger & Partner

(56) Entgegenhaltungen:
- EP-A- 0 458 094
- DE-A- 3 427 367
- DE-U- 9 110 099

## Beschreibung

Die vorliegende Erfindung betrifft ein Winterdienstfahrzeug mit einer Streueinrichtung, umfassend einen Streustoffbehälter, eine Fördereinrichtung mit veränderlichem Durchsatz, eine von der Fördereinrichtung beschickte Schütte und einen unterhalb der Schütte angeordneten, motorisch angetriebenen Streuteller, dessen relative Lage zum Schüttenausgang motorisch veränderbar ist, und mit einem Bedienpult zur Einstellung von Sollwerten für die Breite und die Lage des Streubildes und die Streudichte, wobei eine Steuereinheit zur Steuerung der Streutellerdrehzahl in Abhängigkeit von der eingestellten Breite des Streubildes, des Auftreffpunktes des Streustoffes auf dem Streuteller in Abhängigkeit von der eingestellten Lage des Streubildes und des Durchsatzes der Fördereinrichtung in Abhängigkeit von der eingestellten Streubreite, der eingestellten Streudichte und der gefahrenen Geschwindigkeit vorgesehen ist.

Siehe hierzu die Druckschriften DE-U-9 110 099, DE-A-3 427 367 und EP-A-0 458 094.

Derartige Winterdienstfahrzeuge werden in der Praxis eingesetzt. Deren bekannte Steuereinheit berücksichtigt dabei die folgenden Zusammenhänge:
1. Beim Erhöhen der Drehzahl des Streutellers vergrößert sich aufgrund der Steigerung der Fliehkräfte die Breite des bestreuten Streifens.
2. Durch seitliches Verschieben des Streutellers bezüglich des Schüttenausgangs läßt sich der Winkelbereich (bezogen auf die Streutellerachse) verändern, in welchem das Streugut den Streuteller verläßt; dies bewirkt eine Verlagerung des Streubildes in der Weise, daß z.B. bei rechtsdrehendem Streuteller dessen Verschiebung nach links eine Verlagerung des Streubildes nach links bewirkt und umgekehrt.
3. Der von der Fördereinrichtung geförderte Streustoff wird je nach der Breite des bestreuten Streifens und der von dem Winterdienstfahrzeug gefahrenen Geschwindigkeit auf unterschiedlich große Flächen verteilt; um eine eingestellte Streudichte (Gramm pro m) konstant zu halten, muß daher der Durchsatz der Fördereinrichtung in Abhängigkeit von der Streubreite und der Geschwindigkeit des Winterdienstfahrzeuges verändert werden. Bezogen auf eine bestimmte, z.B. fest eingestellte Streubreite, ist der Durchsatz der Fördereinrichtung in direkter Proportion von der Fahrgeschwindigkeit des Streufahrzeugs abhängig. Jede Veränderung der Fahrgeschwindigkeit bedeutet daher eine entsprechende Veränderung des Förderantriebs der Fördereinrichtung, mittels welcher der Streustoff aus dem Streustoffbehälter dem Streuteller zugeführt wird.

In der Praxis wurde festgestellt, daß beim Einsatz der bekannten, gattungsgemäßen Winterdienstfahrzeuge das tatsächliche Streubild hinsichtlich seiner Lage und seiner Breite bei verschiedenen Geschwindigkeiten in einem unerwünschten Ausmaß von den am Bedienpult eingestellten Werten abweicht. Der vorliegenden Erfindung liegt die Aufgabe zugrunde, ein Winterdienstfahrzeug zu schaffen, mit welchem über einen großen Geschwindigkeitsbereich der Streustoff zuverlässig entsprechend den am Bedienpult eingestellten Daten ausgebracht wird.

Erfindungsgemäß wird diese Aufgabe durch eine der Steuereinheit zugeordnete Kompensationsschaltung gelöst, welche die von der Steuereinheit ermittelten Werte für die Streutellerdrehzahl und den Auftreffpunkt des Streustoffes auf dem Streuteller unter Berücksichtigung des von der Steuereinheit ermittelten Durchsatzes der Fördereinrichtung in der Weise korrigiert, daß bezogen auf den jeweiligen Arbeitspunkt die Streutellerdrehzahl verringert und der Auftreffpunkt des Streustoffes auf dem Streuteller im Sinne eines späteren Streustoff-Abwurfs verschoben wird, wenn der von der Steuereinheit ermittelte Durchsatz der Fördereinrichtung zunimmt, und daß umgekehrt die Streutellerdrehzahl erhöht und der Auftreffpunkt des Streustoffes auf dem Streuteller im Sinne eines früheren Abwurfs verschoben wird, wenn der von der Steuereinrichtung ermittelte Durchsatz der Fördereinrichtung abnimmt.

Nach der Erfindung werden somit sowohl bei Vergrößerung der Fahrgeschwindigkeit des Winterdienstfahrzeuges bei festeingestellter Streudichte und Streubreite, wie auch bei Erhöhung der eingestellten Streudichte und/oder Streubreite die Streutellerdrehzahl reduziert und der Auftreffpunkt des Streustoffes auf dem Streuteller in der Weise verändert, daß der auf dem Streuteller aufgebrachte Streustoff später den Streuteller verläßt.

Zur Verschiebung des Zeitpunktes des Streustoff-Abwurfs vom Streuteller nach "spät" stehen zwei verschiedene Verstellrichtungen zur Verfügung, in denen die Schütte und der Streuteller relativ zueinander verschoben werden können. Zum einen kann der Streuteller bezüglich der Schütte in der im Stand der Technik bekannten Weise quer zur Fahrtrichtung verschoben werden; bei rechtsdrehender Arbeitsweise des Streutellers wird er nach links verschoben, wodurch sich die Schütte bezüglich des Streutellers in dessen Drehrichtung verschiebt. Andererseits kann der Zeitpunkt des Abwurfes des Streustoffes dadurch nach hinten verlegt und das Streubild hierdurch verlagert werden, daß der Auftreffpunkt des Streustoffes auf dem Streuteller radial nach innen verschoben wird, wodurch sich die Verweildauer des Streustoffes auf dem Streuteller, das ist die vom Auftreffen des Streugutes auf dem Streuteller bis zum Abwurf vergehende Zeit, vergrößert. Bei einer bevorzugten Ausführungsform des erfindungsgemäßen Winterdienstfahrzeuges ist daher vorgesehen, daß der Streuteller bezüglich der Schütte nicht nur in einer Richtung verfahren werden kann, sondern daß vielmehr eine zweidimensionale Lageveränderbarkeit des Streutellers bezüglich der Schütte möglich ist. Hierzu sind zweckmäßigerweise zwei unabhängige Linearführungen vorgesehen, welche einerseits eine Verschiebung des Streutellers nach rechts bzw. links und andererseits dessen Verschiebung nach vorne bzw. hinten gestatten. An der Streueinrichtung sind dementsprechend zwei Verstellmotore vorgesehen, jeweils einer für eine Bewegungsrichtung.

Bei einer weiteren Ausführungsform des erfindungsgemäßen Winterdienstfahrzeuges ist ferner vorgesehen, daß die Kompensationsschaltung die von der Steuereinheit ermittelte Streutellerdrehzahl unter Berücksichtigung der eingestellten Lage des Streubildes in der Weise korrigiert, daß die Streutellerdrehzahl verringert wird, wenn die Lage des Streubildes in der der Drehrichtung des Streutellers entsprechenden Richtung verschoben wird. Wird beispielsweise bei einem derartigen Winterdienstfahrzeug mit rechtsdrehendem Streuteller die eingestellte Lage des Streubildes nach rechts verschoben (beispielsweise Übergang von der Einstellung "Mitte" zu der Einstellung "asymmetrisch rechts"), so führt eine entsprechende Steuerkorrektur in der Kompensationsschaltung zu einer Verringerung der Streutellerdrehzahl. Umgekehrt wird bei dem gleichen Winterdienstfahrzeug die Streutellerdrehzahl angehoben, wenn die Lage des Streubildes nach links verschoben wird (beispielsweise durch Übergang von der Einstellung "Mitte" auf die Einstellung "asymmetrisch links"). Diese zusätzlich in der Kompensationsschaltung vorgesehene Korrektursteuerung trägt zu einer weiteren Steigerung der Genauigkeit, mit welcher die am Bedienpult eingestellten Werte für das erwünschte Streubild vom tatsächlichen Streubild eingehalten werden, bei.

Bevorzugt ist an dem Bedienpult des erfindungsgemäßen Winterdienstfahrzeuges zusätzlich ein auf die Steuereinheit und die Kompensationsschaltung wirkender Streustoffwählschalter vorgesehen. Dabei wird in der Steuereinheit die eingestellte Streustoffart bei der Ermittlung der Drehzahl des Antriebs der Fördereinrichtung berücksichtigt; denn das jeweilige spezifische Gewicht des Streustoffes verändert bei gleichem geförderten Volumen den Wert der Streudichte (Gramm pro m), so daß bei gleicher gewünschter Streudichte bei einem spezifisch leichteren Streustoff das geforderte Streustoffvolumen angehoben werden muß. In der Kompensationsschaltung wird demgegenüber die Art des Streustoffes bei der Korrektur des von der Steuereinheit ermittelten Auftreffpunktes des Streustoffes auf dem Streuteller in der Weise berücksichtigt, daß in Abhängigkeit von der Haftfähigkeit eines Streustoffes auf dem Streuteller der Auftreffpunkt des Streustoffes auf dem Streuteller verschoben wird. Dabei wird die Haftfähigkeit des Streustoffes auf dem Streuteller beispielsweise maßgeblich von der Korngröße des Streustoffes beeinflußt. Bei Steigerung der Haftfähigkeit des Streustoffes auf dem Streuteller wird dabei bevorzugt der Auftreffpunkt des Streustoffes auf dem Streuteller radial nach außen verschoben, so daß der Abwurfzeitpunkt beibehalten wird. Darüberhinaus kann in der Kompensationsschaltung auch die von der Steuereinheit ermittelte Drehzahl des Streutellers in Abhängigkeit von der Haftfähigkeit und des Flugverhaltens des eingestellten Streustoffes korrigiert werden; denn eine veränderte Haftfähigkeit des Streustoffes auf dem Streuteller wirkt sich auch auf die Abgangsgeschwindigkeit und somit auf die Streubreite aus, und schlechtes Flugverhalten insbesondere bei relativ leichtem Streustoff mit großer Oberfläche führt bei gleicher Abgangsgeschwindigkeit zu einer verringerten Streubreite. Bei hoher Haftung bzw. schlechtem Flugverhalten wird die Drehzahl in der Kompensationsschaltung nach oben, bei geringer Haftung bzw. gutem Flugverhalten nach unten korrigiert.

Mit der Kompensationsschaltung ist zweckmäßigerweise ein Betriebspunktspeicher gekoppelt, in welchen empirisch ermittelte Betriebspunkte eingespeichert werden können; die Kompensationsschaltung umfaßt dabei eine Interpolationsschaltung, mittels welcher zur Korrektur der von der Steuereinheit ermittelten Werte bei entsprechenden Betriebszuständen zwischen abgespeicherten Betriebspunkten interpoliert wird. Bei einer derartigen Ausgestaltung der Kompensationsschaltung bedarf es nicht der aufwendigen analytischen Bestimmung vollständiger Kennlinienverläufe. Vielmehr kann die Kompensationsschaltung unter Verwendung einer sog. Learn-Schaltung einfach, zuverlässig und ohne großen Aufwand auf die beim jeweiligen Einsatz des Winterdienstfahrzeuges vorliegenden Bedingungen programmiert werden, beispielsweise auf die spezifischen Eigenschaften des eingesetzten Streustoffes. LearnSchaltungen, die sich zur Verwendung bei dem erfindungsgemäßen Winterdienstfahrzeug eignen, sind als solche im Stand der Technik bekannt; von einer eingehenden Beschreibung ihres Aufbaues wird daher abgesehen.

Im folgenden wird die Erfindung anhand der Zeichnung näher erläutert.
- Fig. 1: veranschaulicht ein Ausführungsbeispiel der im Rahmen der Erfindung vorgesehenen Steuerung in Form eines schematischen Blockschaltbildes und
- Fig. 2: zeigt schematisch eine bevorzugte Möglichkeit zur Variierung des Auftreffpunktes des Streugutes auf dem Streuteller.

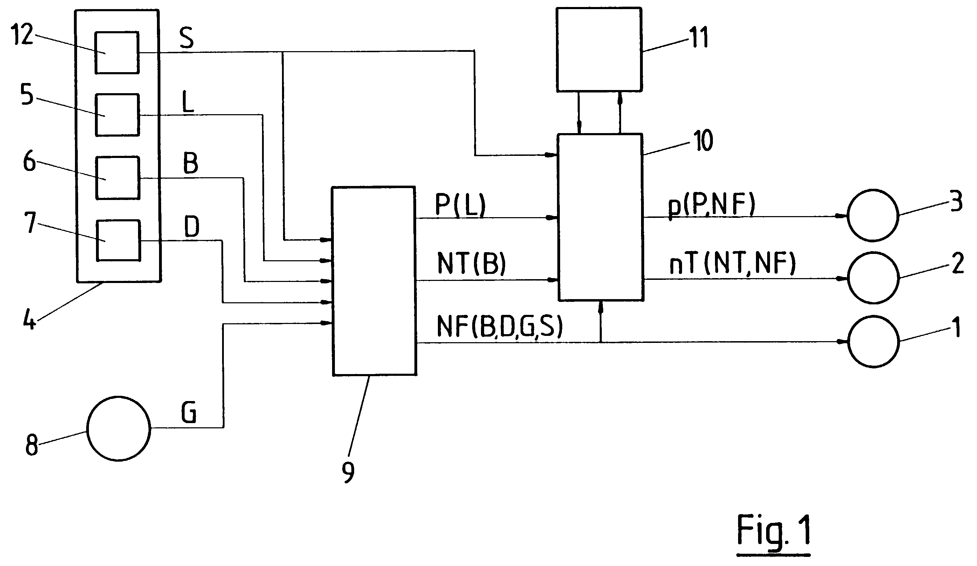

An der Streueinrichtung des Winterdienstfahrzeuges sind drei Antriebe vorgesehen, welche gemäß Fig. 1 über die Steuereinheit 9 und die Kompensationsschaltung 10 gesteuert werden. Es sind dies der Antrieb der Fördereinrichtung (Förderantrieb 1), der Antrieb für den Streuteller (Tellerantrieb 2) und der Antrieb für die Lageverstellung des Streutellers (Lageantrieb 3). Diese drei Antriebe dienen der direkten Beeinflussung des Streubildes nach Dichte, Breite und Lage (Symmetrie/Asymmetrie).

In dem Führerhaus des Winterdienstfahrzeuges ist ein Bedienpult 4 vorgesehen. Dieses weist vier Wählschalter auf, mit welchen Sollwerte für die Lage L des Streubildes (Lagewählschalter 5) und dessen Breite B (Breitenwählschalter 6), die Streudichte D (Dichtewählschalter 7) sowie die Art des ausgebrachten Streustoffes S (Streustoffwählschalter 12) eingestellt werden können. Mit dem Getriebeausgang des Fahrzeuges ist ein Tachogenerator 8 gekoppelt, welcher ein Geschwindigkeitssignal G erzeugt.

Die am Bedienpult 4 eingestellten Sollwerte für die Lage und Breite des Streubildes sowie die Streudichte L, B und D, wie auch das Geschwindigkeitssignal G werden - in bekannter Weise - der Steuereinheit 9 zugeführt. Die Steuereinheit ermittelt aus den ihr zugeführten Daten - ebenfalls in bekannter Weise - eine Grundeinstellung für die drei Antriebe. Diese Grundeinstellung umfaßt die Drehzahl NF des Förderantriebs, die Drehzahl NT des Streutellers und die Position P des Lageantriebs. In der bekannten und weiter oben skizzierten Weise hängt dabei die Drehzahl NF des Förderantriebes von dem eingestellten Sollwert B für die Breite des Streubildes, dem eingestellten Sollwert D für die Streudichte sowie dem die augenblickliche Geschwindigkeit repräsentierenden Geschwindigkeitssignal G ab; die Drehzahl NT des Streutellers hängt von dem eingestellten Sollwert B für die Breite des Streubildes ab und die Position P des Lageantriebs von dem eingestellten Sollwert L für die Lage des Streubildes.

Der Förderantrieb 1 wird mit der von der Steuereinheit 9 ermittelten Drehzahl NF betrieben; die Steuereinheit 9 wirkt hierzu direkt auf den Förderantrieb 1. Zwischen den Tellerantrieb 2 und den Lageantrieb 3 einerseits und die Steuereinheit 9 andererseits ist die Kompensationsschaltung 10 eingefügt. In ihr werden die von der Steuereinheit 9 ermittelten Grundwerte für die Streutellerdrehzahl NT und für die Position P des Lageantriebes in Abhängigkeit von der Drehzahl NF des Förderantriebs korrigiert. Der Tellerantrieb 2 wird somit mit der korrigierten Drehzahl nT betrieben, welche von der nicht korrigierten Tellerdrehzahl NT und der Drehzahl des Förderantriebs NF abhängt. Der Lageantrieb 3 nimmt die korrigierte Position p ein, welche von der nicht korrigierten Position P und der Drehzahl des Förderantriebs NF abhängt.

Die Korrektur in der Kompensationsschaltung 10 erfolgt dabei in der Weise, daß die korrigierte Streutellerdrehzahl nT gegenüber der nicht korrigierten Streutellerdrehzahl NT mit steigender Drehzahl des Förderantriebs NF zunehmend verringert wird und daß die korrigierte Position p des Lageantriebs gegenüber der nicht korrigierten Position P in der Weise verschoben wird, daß der Streustoff radial weiter innen auf dem Streuteller auftrifft.

Mit der Kompensationsschaltung 10 ist der Betriebspunktspeicher 11 gekoppelt. Von den in ihm abgespeicherten Betriebspunkten werden die dem jeweiligen Betriebszustand am nächsten kommenden von der Kompensationsschaltung abgerufen, welche anschließend zwischen ihnen interpoliert, um die optimalen korrigierten Werte für die Streutellerdrehzahl nT und die Position des Lageantriebs p zu ermitteln. Ferner wird das von dem am Bedienpult 4 vorgesehenen Streustoffwählschalter 12 abgegebene Streustoffsignal S zur Berücksichtigung des jeweils gewählten Streustoffs an die Steuereinheit 9 und die Kompensationsschaltung 10 geleitet. In der Steuereinheit 9 wird das Streustoffsignal S dabei insbesondere im Hinblick auf das unterschiedliche spezifische Gewicht bzw. das Förderverhalten der verschiedenen Streustoffe berücksichtigt, das sich auf die erforderliche Drehzahl des Förderantriebs 1 auswirkt. In der Kompensationsschaltung 10 wird das Streustoffsignal S zur Berücksichtigung der Haftfähigkeit des jeweils eingestellten Streustoffes verwertet.

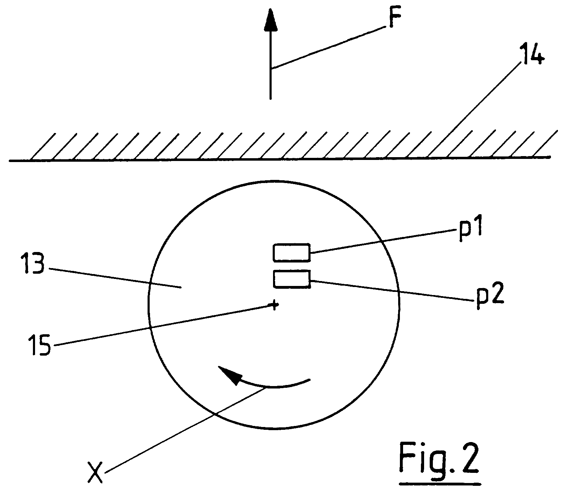

In Fig. 2, welche eine schematische Draufsicht auf einen Streuteller 13 darstellt, sind zwei verschiedene Positionen des Ausgangs der Streustoffschütte oberhalb des Streutellers 13 dargestellt. Der Streuteller ist rechtsdrehend angetrieben (Pfeil "X"). Die Fahrtrichtung des Winterdienstfahrzeuges, dessen Heck 14 schematisch angedeutet ist, ist durch den Pfeil "F" gekennzeichnet. Da es für die vorliegende Erfindung auf die Aufhängung des Streutellers 13 am Heck 14 des Winterdienstfahrzeuges nicht ankommt, ist diese aus Gründen der Übersichtlichkeit in Fig. 2 nicht dargestellt.

Die erste Position p1 entspricht der von der Steuereinheit und der Kompensationsschaltung für einen geringen Durchsatz der Fördereinrichtung ermittelten optimalen Stellung des Schüttenausgangs oberhalb des Streutellers 13; die zweite, radial weiter innen, d.h. mehr an der Drehachse 15 des Streutellers 13 liegende Position p2 entspricht derjenigen Stellung des Schüttenausgangs oberhalb des Streustofftellers, die von der Kompensationsschaltung bei einem vergrößerten Durchsatz der Fördereinrichtung ermittelt wird. Da in der Steuereinheit der Durchsatz der Fördereinrichtung proportional zur gefahrenen Geschwindigkeit des Winterdienstfahrzeuges gesteuert wird, verschiebt sich somit durch die Kompensationsschaltung bei unveränderter Einstellung des Bedienpultes der Ausgang der Streustoffschütte von der Position p1 zur Position p2, wenn das Winterdienstfahrzeug von langsamer Fahrt auf seine maximale Geschwindigkeit beschleunigt wird. Selbstverständlich läßt sich der gleiche Effekt auch dadurch erreichen, daß der Streuteller bei feststehender Schütte nach vorne, d.h. in Fahrtrichtung F verschoben wird.

Die gleiche Verlagerung des Schüttenausgangs bezüglich des Streutellers von der Position p1 in Richtung auf die Position p2 wird von der Kompensationsschaltung bei Vergrößerung der eingestellten Streubreite vollzogen, da auch in diesem Falle bei sonst unveränderten eingestellten Werten der Durchsatz der Fördereinrichtung proportional gesteigert wird. Und auch bei einer Erhöhung der eingestellten Streudichte wird der Schüttenausgang von der Position p1 in Richtung auf die Position p2 verschoben.

## Patentansprüche

1. Winterdienstfahrzeug mit einer Streueinrichtung, umfassend einen Streustoffbehälter, eine Fördereinrichtung mit veränderlichem Durchsatz, eine von der Fördereinrichtung beschickte Schütte und einen unterhalb der Schütte angeordneten, motorisch angetriebenen Streuteller, dessen relative Lage zum Schüttenausgang motorisch veränderbar ist, und mit einem Bedienpult (4) zur Einstellung von Sollwerten für die Breite (B) und die Lage (L) des Streubildes sowie die Streudichte (D), wobei eine Steuereinheit (9) zur Steuerung
- der Streutellerdrehzahl in Abhängigkeit von der eingestellten Breite (B) des Streubildes,
- des Auftreffpunktes des Streustoffes auf dem Streuteller in Abhängigkeit von der eingestellten Lage (L) des Streubildes und
- des Durchsatzes der Fördereinrichtung in Abhängigkeit von der eingestellten Streubreite (B), der eingestellten Streudichte (D) und der gefahrenen Geschwindigkeit (G) vorgesehen ist,
gekennzeichnet durch eine der Steuereinheit (9) zugeordnete Kompensationsschaltung (10), welche die von der Steuereinheit (9) ermittelten Werte für die Streutellerdrehzahl (NT) und den Auftreffpunkt des Streustoffes auf dem Streuteller (Position P) unter Berücksichtigung des von der Steuereinheit ermittelten Durchsatzes der Fördereinrichtung in der Weise korrigiert, daß, bezogen auf den jeweiligen Arbeitspunkt, die Streutellerdrehzahl (nT) verringert und der Auftreffpunkt (p) des Streustoffes auf dem Streuteller im Sinne eines späteren Streustoff-Abwurfs verschoben wird, wenn der von der Steuereinheit (9) ermittelte Durchsatz der Fördereinrichtung zunimmt, und daß umgekehrt die Streutellerdrehzahl (nT) erhöht und der Auftreffpunkt (p) des Streustoffs auf den Streuteller im Sinne eines früheren Abwurfs verschoben wird, wenn der von der Steuereinrichtung (S) ermittelte Durchsatz der Fördereinrichtung abnimmt.

2. Winterdienstfahrzeug nach Anspruch 1,
dadurch gekennzeichnet,
daß der Auftreffpunkt des Streustoffes auf dem Streuteller bei zunehmendem Durchsatz der Fördereinrichtung in Richtung der Streutellerdrehung verschoben wird.

3. Winterdienstfahrzeug nach Anspruch 1,
dadurch gekennzeichnet,
daß der Auftreffpunkt des Streustoffes auf dem Streuteller bei zunehmendem Durchsatz der Fördereinrichtung radial nach innen verschoben wird.

4. Winterdienstfahrzeug nach Anspruch 1,
dadurch gekennzeichnet,
daß die Kompensationsschaltung (10) die von der Steuereinheit (9) ermittelte Streutellerdrehzahl (NT) unter Berücksichtigung der eingestellten Lage des Streubildes (L) in der Weise korrigiert, daß die Streutellerdrehzahl (nT) verringert wird, wenn die Lage des Streubildes in der der Drehrichtung des Streutellers entsprechenden Richtung verschoben wird.

5. Winterdienstfahrzeug nach Anspruch 1,
dadurch gekennzeichnet,
daß an dem Bedienpult (4) ein auf die Steuereinheit (9) und die Kompensationsschaltung (10) wirkender Streustoffwählschalter (12) vorgesehen ist, wobei die Kompensationsschaltung (10) den von der Steuereinheit ermittelten Auftreffpunkt des Streustoffes auf dem Streuteller unter Berücksichtigung der Einstellung des Streustoffwählschalters (12) in Abhängigkeit von der Haftfähigkeit des am Streustoffwählschalter eingestellten Streustoffes auf dem Streuteller korrigiert.

6. Winterdienstfahrzeug nach Anspruch 1,
dadurch gekennzeichnet,
daß an dem Bedienpult (4) ein auf die Steuereinheit (9) und die Kompensationsschaltung (10) wirkender Streustoffwählschalter (12) vorgesehen ist, wobei die Kompensationsschaltung (10) die von der Steuereinheit ermittelte Streutellerdrehzahl (NT) unter Berücksichtigung der Einstellung des Streustoffwählschalters (12) in Abhängigkeit von der Haftfähigkeit des am Streustoffwählschalter eingestellten Streustoffes auf dem Streuteller korrigiert.

7. Winterdienstfahrzeug nach Anspruch 1,
dadurch gekennzeichnet,
daß an dem Bedienpult (4) ein auf die Steuereinheit (9) und die Kompensationsschaltung (10) wirkender Streustoffwählschalter (12) vorgesehen ist, wobei die Kompensationsschaltung (10) die von der Steuereinheit ermittelte Streutellerdrehzahl (NT) unter Berücksichtigung der Einstellung des Streustoffwählschalters (12) in Abhängigkeit von dem Flugverhalten des am Streustoffwählschalter eingestellten Streustoffes korrigiert.

8. Winterdienstfahrzeug nach Anspruch 1,
dadurch gekennzeichnet,
daß mit der Kompensationsschaltung (10) ein Betriebspunktspeicher (11) gekoppelt ist, in welchem Betriebspunkte eingespeichert sind, und daß die Kompensationsschaltung (10) eine Interpolationsschaltung umfaßt, mittels welcher zur Korrektur der von der Steuereinheit (9) ermittelten Werte bei entsprechenden Betriebszuständen zwischen abgespeicherten Betriebspunkten interpoliert wird.

## Claims

1. Winter service vehicle with a spreading device, comprising a container for the material to be spread, a conveying device with variable throughput, a chute fed by the conveying device and a motor-driven spreading plate located below the chute, the relative position of which spreading plate with respect to the chute outlet can be varied in a motorised manner and with a control desk (4) for adjusting reference values for the width (B) and the position (L) of the spreading pattern as well as the spreading density (D), a control unit (9) being provided for controlling
- the spreading plate speed depending on the adjusted width (B) of the spreading pattern,
- the point of impact of the material to be spread on the spreading plate depending on the adjusted position (L) of the spreading pattern and
- the throughput of the conveying device depending on the adjusted spreading width (B), the adjusted spreading density (D) and the travelling speed (G),
characterised by a compensation circuit (10) associated with the control device (9), which circuit (10) corrects the values ascertained by the control unit (9) for the spreading plate speed (NT) and the point of impact of the material to be spread on the spreading plate (position B) taking into consideration the throughput of the conveying device ascertained by the control unit, in such a manner that, with regard to the respective working point, the spreading plate speed (nT) is reduced and the point of impact (p) of the material to be spread on the spreading plate is moved for the purpose of a later release of the material to be spread, when the throughput of the conveying device ascertained by the control unit (9) increases, and that conversely, the spreading plate speed (nT) is increased and the point of impact (p) of the material to be spread on the spreading plate is moved for the purpose of an earlier release, when the throughput of the conveying device ascertained by the control device (S) decreases.

2. Winter service vehicle according to Claim 1, characterised in that in the case of an increasing throughput of the conveying device, the point of impact of the material to be spread on the spreading plate is moved in the direction of the spreading plate rotation.

3. Winter service vehicle according to Claim 1, characterised in that in the case of increasing throughput of the conveying device, the point of impact of the material to be spread on the spreading plate is moved radially inwards.

4. Winter service vehicle according to Claim 1, characterised in that the compensation circuit (10) corrects the spreading plate speed (NT) ascertained by the control unit (9), taking into consideration the adjusted position of the spreading pattern (L) in such a way that the spreading plate speed (nT) is reduced, if the position of the spreading pattern is moved in the direction corresponding to the direction of rotation of the spreading plate.

5. Winter service vehicle according to Claim 1, characterised in that provided on the control desk (4) is a spreading material selection switch (12) acting on the control unit (9) and the compensation circuit (10), the compensation circuit (10) correcting the point of impact of the material to be spread on the spreading plate, ascertained by the control unit, taking into consideration the adjustment of the spreading material selection switch (12) depending on the adherence of the spreading material on the spreading plate, adjusted at the spreading material selection switch.

6. Winter service vehicle according to Claim 1, characterised in that provided on the control desk (4) is a spreading material selection switch (12) acting on the control unit (9) and the compensation circuit (10), the compensation circuit (10) correcting the spreading plate speed (NT) ascertained by the control unit, taking into consideration the adjustment of the spreading material selection switch (12) depending on the adherence of the spreading material on the speading plate, adjusted at the spreading material selection switch.

7. Winter service vehicle according to Claim 1, characterised in that provided on the control desk (4) is a spreading material selection switch (12) acting on the control unit (9) and the compensation circuit (10), the compensation circuit (10) correcting the spreading plate speed (NT) ascertained by the control unit, taking into consideration the adjustment of the spreading material selection switch (12) depending on the flying characteristics of the spreading material adjusted at the spreading material selection switch.

8. Winter service vehicle according to Claim 1, characterised in that connected to the compensation circuit (10) is an operating point memory (11), in which operating points are memorised, and that the compensation circuit (10) comprises an interpolation circuit, by means of which, for the correction of the values ascertained by the control unit (9), with corresponding operating conditions, interpolation is carried out between memorised operating points.

## Revendications

1. Véhicule d'épandage pour service d'hiver comportant un dispositif d'épandage, comprenant un conteneur de matière à épandre, un dispositif d'acheminement à débit variable, une glissière chargée par le dispositif d'acheminement et une sole distributrice disposée au-dessous de la glissière, entraînée par moteur, dont la position relative par rapport à la sortie de glissière peut être modifiée par moteur, et comportant un pupitre de commande (4) pour le réglage de valeurs de consigne pour l'étendue (B) et la position (L) du diagramme de dispersion, ainsi que pour la densité de dispersion (D), dans lequel une unité de commande (9) est prévue pour la commande
- de la vitesse de rotation de la sole distributrice en fonction du réglage de l'étendue (B) du diagramme de dispersion,
- du point d'impact de la matière à épandre sur la sole distributrice en fonction du réglage de la position (L) du diagramme de dispersion et
- du débit du dispositif d'acheminement en fonction du réglage de l'étendue de dispersion (B), du réglage de la densité de dispersion (D) et de la vitesse (G) de travail,
caractérisé par un circuit de compensation (10) associé à l'unité de commande (9), lequel corrige les valeurs déterminées par l'unité de commande (9) pour la vitesse de rotation (NT) de la sole distributrice et le point d'impact de la matière à épandre sur la sole distributrice (position P) en considération du débit, déterminé par l'unité de commande, du dispositif d'acheminement de manière que, par rapport au point de travail respectif, la vitesse de rotation (nT) de la sole distributrice est diminuée et que le point d'impact (p) de la matière à épandre sur la sole distributrice est décalé au sens d'un déversement de matière à épandre ultérieur, lorsque le débit du dispositif d'acheminement déterminé par l'unité de commande (9) augmente, et que, à l'inverse, la vitesse de rotation (nT) de la sole distributrice s'élève et que le point d'impact (p) de la matière à épandre sur la sole distributrice est décalé au sens d'un déversement antérieur, lorsque le débit du dispositif d'acheminement déterminé par le dispositif de commande (S) décroît.

2. Véhicule d'épandage pour service d'hiver selon la revendication 1, caractérisé en ce que le point d'impact de la matière à épandre sur la sole distributrice est, lorsque le débit du dispositif d'acheminement augmente, décalé dans le sens de rotation de la sole distributrice.

3. Véhicule d'épandage pour service d'hiver selon la revendication 1, caractérisé en ce que le point d'impact de la matière à épandre sur la sole distributrice est, lorsque le débit du dispositif d'acheminement augmente, décalé dans le sens radial vers l'intérieur.

4. Véhicule d'épandage pour service d'hiver selon la revendication 1, caractérisé en ce que le circuit de compensation (10) corrige la vitesse de rotation (NT) de la sole distributrice, déterminée par l'unité de commande (9), en considération du réglage de la position du diagramme de dispersion (L), de manière que la vitesse de rotation (nT) de la sole distributrice est diminuée, lorsque la position du diagramme de dispersion est décalée dans le sens correspondant au sens de rotation de la sole distributrice.

5. Véhicule d'épandage pour service d'hiver selon la revendication 1, caractérisé en ce que, sur le pupitre de commande (4), un commutateur sélectif (12) de matière à épandre agissant sur l'unité de commande (9) et le circuit de compensation (10) est prévu, dans lequel le circuit de compensation (10) corrige le point d'impact, déterminé par l'unité de commande, de la matière à épandre sur la sole distributrice en considération du réglage du commutateur sélectif (12) de matière à épandre en fonction de la propriété adhésive de la matière à épandre réglée au niveau du commutateur sélectif de matière à épandre,sur la sole distributrice.

6. Véhicule d'épandage pour service d'hiver selon la revendication 1, caractérisé en ce que, sur le pupitre de commande (4), un commutateur sélectif (12) de matière à épandre agissant sur l'unité de commande (9) et le circuit de compensation (10) est prévu, dans lequel le circuit de compensation (10) corrige la vitesse de rotation (NT) de la sole distributrice, déterminée par l'unité de commande, en considération du réglage du commutateur sélectif (12) de matière à épandre en fonction de la propriété adhésive de la matière à épandre, réglée au niveau du commutateur sélectif de matière à épandre, sur la sole distributrice.

7. Véhicule d'épandage pour service d'hiver selon la revendication 1, caractérisé en ce que, sur le pupitre de commande (4), un commutateur sélectif (12) de matière à épandre agissant sur l'unité de commande (9) et le circuit de compensation (10) est prévu, dans lequel le circuit de compensation (10) corrige la vitesse de rotation (NT) de la sole distributrice déterminée par l'unité de commande, en considération du réglage du commutateur sélectif (12) de matière à épandre en fonction de la dispersibilité de la matière à épandre réglée au niveau du commutateur sélectif de matière à épandre.

8. Véhicule d'épandage selon la revendication 1, caractérisé en ce que une mémoire de points de fonctionnement (11) est couplée au circuit de compensation (10), dans laquelle sont enregistrés des points de fonctionnement, et en ce que le circuit de compensation (10) comprend un circuit d'interpolation, au moyen duquel existe une interpolation entre des points de fonctionnement enregistrés dans des conditions de fonctionnement correspondantes, qui est destinée à la correction des valeurs déterminées par l'unité de commande (9).
